# DEMANDE DE BREVET EUROPEEN

(11) **EP 1 686 598 A1**
(43) Date de publication de la demande: **02.08.2006**
(21) Numéro de dépôt: 06354003.3
(22) Date de dépôt: 20.01.2006
(51) Int. Cl.: H01G 4/12, H01G 4/20, H01G 4/33

(54) **Condensateur à champ de claquage élevé**

(30) Priorité: 01.02.2005 FR 0500981
(71) Demandeur: COMMISSARIAT A L'ENERGIE ATOMIQUE, 75752 Paris (FR)
(72) Inventeur: Defay, Emmanuel, 38340 Voreppe (FR)
(74) Mandataire: Jouvray, Marie-Andrée

(57) **Abrégé**

Le condensateur est un condensateur à films minces comportant deux électrodes métalliques (1,2) séparées par un diélectrique (3). Le diélectrique (3) est constitué par la superposition d'au moins deux sous-couches (4a,4b) de matériau diélectrique, de préférence à base de pérovskite. Deux sous-couches diélectriques (4a,4b) superposées adjacentes sont séparées par une couche intermédiaire métallique (5), par exemple en platine, isolée électriquement. L'utilisation de sous-couches diélectriques (4a,4b) très fines, de préférence de moins de 20nm d'épaisseur, séparées les unes des autres par des couches intermédiaires métalliques (5), permet de transposer au niveau du condensateur l'augmentation du champ de claquage et la diminution des courants de fuite liées à une réduction de l'épaisseur du diélectrique, tout en conservant un champ de travail raisonnable.

## Description

### Domaine technique de l'invention

L'invention concerne un condensateur à films minces comportant deux électrodes séparées par un diélectrique constitué par la superposition d'au moins deux sous-couches de matériau diélectrique, deux sous-couches diélectriques superposées adjacentes étant séparées par une couche intermédiaire métallique, isolée électriquement.

### État de la technique

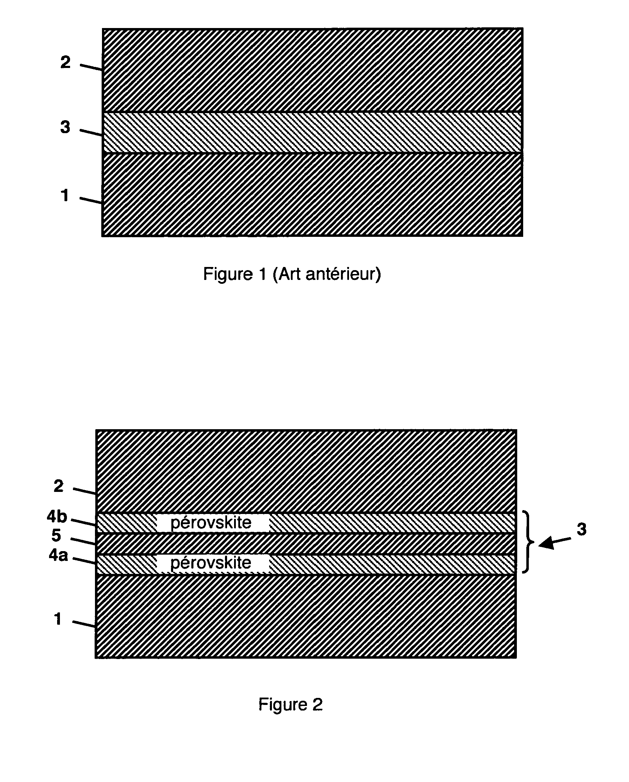

Les condensateurs à films minces, très largement utilisés en microélectronique, comportent classiquement deux électrodes 1 et 2 séparées par un diélectrique 3 (figure 1).

On souhaite de plus en plus réduire les dimensions des composants, tout en conservant les mêmes propriétés. Dans le cas des condensateurs intégrés, il faut pour cela augmenter la capacité surfacique C. Or, lorsque le diélectrique est constitué par une couche mince en matériau diélectrique, la capacité surfacique C est donnée par la formule :

C = ε₀εᵣS/e

dans laquelle
- S est la surface des électrodes 1 et 2 en regard, dans le cas d'un condensateur plan,
- ε₀ est la constante diélectrique du vide,
- εᵣ est la constante diélectrique relative du matériau constituant la couche en matériau diélectrique, et
- e est l'épaisseur de la couche diélectrique.

Il est donc possible d'agir sur les trois paramètres S, e et εᵣ pour augmenter la capacité surfacique d'un condensateur.

Cependant, l'augmentation de la surface S va à l'encontre du but recherché, à savoir la diminution des dimensions du composant. Il est cependant possible d'augmenter artificiellement cette surface en utilisant des structures non-planaires. La fabrication de telles structures est complexe et nécessite des équipements coûteux.

La diminution de l'épaisseur e de la couche diélectrique est limitée par l'apparition de courants de fuite importants lorsque l'épaisseur devient très faible et par une sensibilité accrue à la technologie de fabrication.

Pour augmenter la constante diélectrique εᵣ, qui est typiquement de 4 pour l'oxyde de silicium (SiO₂), diélectrique le plus fréquemment utilisé en microélectronique, il a été proposé d'utiliser d'autres matériaux diélectriques, plus particulièrement des matériaux à base de pérovskite, dont la constante diélectrique relative peut atteindre 1000. Ces matériaux diélectriques sont notamment le Pb(Zr,Ti)O₃ aussi appelé PZT, le (Pb,La)(Zr,Ti)O₃ aussi appelé PLZT, le Pb(Mg,Nb,Ti)O₃ aussi appelé PMNT, le (Ba,Sr)TiO₃ aussi appelé BST, le SrTiO₃ aussi appelé STO, le BaTiO₃ aussi appelé BTO, et le PbTiO₃ aussi appelé PTO. Cependant, il a été observé que plus les matériaux ont une constante diélectrique élevée, plus leur champ de claquage est faible et plus les courants de fuite sont élevés.

Pour surmonter cet inconvénient, il a été proposé, notamment dans les demandes de brevet US-A-2003/0096473 et US-A-2003/0184952, de former un diélectrique multicouche avec une alternance de matériaux diélectriques différents et de disposer une couche diélectrique amorphe aux interfaces avec les électrodes. L'association d'une couche en matériau diélectrique à haute permittivité et faible champ de claquage et d'une couche en matériau diélectrique à faible permittivité et fort champ de claquage permet, notamment, d'obtenir un compromis entre ces deux caractéristiques. Par ailleurs, l'interface en matériau amorphe permet de contrebalancer l'augmentation des courants de fuite due à la structure polycristalline de la plupart des matériaux à très forte permittivité.

Par ailleurs, le document JP-A-01244602 décrit un condensateur à films minces de petite taille ayant néanmoins une grande capacité et une rigidité diélectrique élevée. Il comporte une alternance de couches diélectriques en polyimide et de couches conductrices en aluminium entre les électrodes du condensateur. Dans ce type de condensateur, les couches métalliques ont essentiellement pour fonction de permettre l'accrochage de la résine constituant les couches diélectriques, pour permettre l'obtention d'une épaisseur globale suffisante de diélectrique. En effet, la tension de claquage du condensateur est proportionnelle à l'épaisseur totale de diélectrique, donc pour des sous-couches d'épaisseur prédéterminée, proportionnelle à leur nombre.

### Objet de l'invention

L'invention a pour but un condensateur ne présentant pas les inconvénients des condensateurs connus et, plus particulièrement, un condensateur de taille réduite ayant des propriétés au moins équivalentes à celles des condensateurs connus.

Selon l'invention, ce but est atteint par un condensateur selon les revendications annexées et plus particulièrement par le fait que le matériau diélectrique a une constante diélectrique supérieure à 50 et un champ de claquage qui augmente fortement au-dessous d'une certaine épaisseur.

Selon un développement de l'invention, le matériau diélectrique est à base de pérovskite et chaque sous-couche en matériau diélectrique a une épaisseur inférieure ou égale à 50nm.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre schématiquement un condensateur selon l'art antérieur.
Les figures 2 et 3 représentent schématiquement deux variantes de réalisation d'un condensateur selon l'invention.
La figure 4 illustre les variations du champ de claquage en fonction de l'épaisseur pour de diélectrique, dans le cas d'un diélectrique de type STO.

### Description de modes particuliers de réalisation

Le condensateur selon l'invention exploite le fait que certains matériaux diélectriques ayant une constante diélectrique supérieure à 50, en particulier les diélectriques à structure pérovskite, ont un courant de fuite qui diminue et un champ de claquage qui augmente fortement lorsque leur épaisseur diminue en dessous d'une certaine épaisseur, plus particulièrement en dessous de 50nm pour les pérovskites.

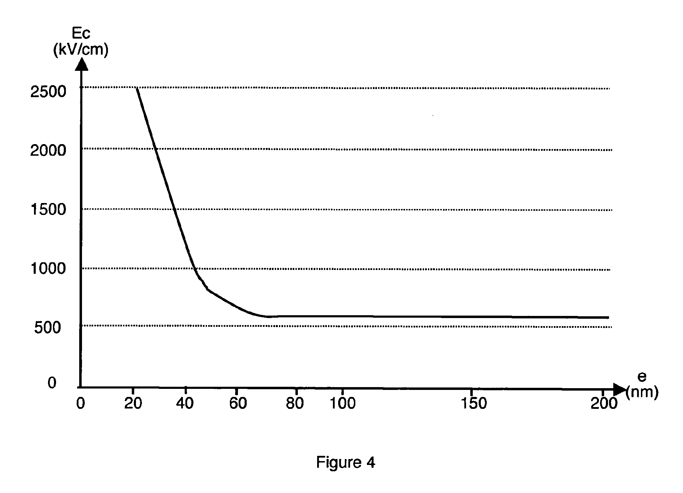

Ceci est illustré à la figure 4, pour un diélectrique à base de STO. Cette figure représente en effet les valeurs, mesurées expérimentalement, du champ de claquage Ec en fonction de l'épaisseur e d'une couche de STO disposée entre deux électrodes en platine, ayant chacune 100nm d'épaisseur. Tandis que le champ de claquage est relativement constant (de l'ordre de 600kV/cm) au-dessus d'une épaisseur de 60nm, il commence à augmenter au-dessous de cette valeur, passant notamment à 800kV/cm pour 50nm, et augmente très fortement au-dessous de 50nm, pour dépasser 2000kV/cm vers 20nm.

Tous les diélectriques à base de pérovskite présentent une forte augmentation du champ de claquage lorsque leur épaisseur diminue au-dessous d'un certain seuil. Le seuil et les valeurs des tensions de claquage dépendent du type de pérovskite considéré, mais, dans tous les cas, la variation du champ de claquage est très forte au-dessous de 50nm.

Cependant, la seule diminution de l'épaisseur de la couche diélectrique 3 d'un condensateur selon la figure 1 conduirait à une augmentation correspondante du champ électrique de travail.

Dans le mode de réalisation particulier de la figure 2, le diélectrique 3 séparant les électrodes 1 et 2 du condensateur est constitué par deux sous-couches diélectriques 4a et 4b en matériau diélectrique à base de pérovskite superposées, séparées par une couche intermédiaire métallique 5. La couche intermédiaire métallique 5 est isolée électriquement, c'est-à-dire qu'elle n'est pas connectée aux électrodes 1 et 2. Les sous-couches 4a et 4b sont plus fines que la couche de matériau diélectrique constituant le diélectrique 3 du condensateur selon la figure 1.

L'introduction de la couche intermédiaire métallique 5 entre deux sous-couches diélectriques adjacentes de faible épaisseur permet de conserver les avantages liés à la réduction de l'épaisseur du diélectrique à base de pérovskite tout en permettant de maintenir un champ électrique de travail raisonnable.

Le tableau ci-dessous permet de comparer les propriétés de trois types de condensateurs, comportant tous un diélectrique 3 à base de pérovskite entre deux électrodes 1 et 2 en platine, de 100nm d'épaisseur et formés en technologie silicium sur isolant, c'est-à-dire sur une couche en SiO₂ formée sur un substrat de silicium :
- un condensateur A1 selon la figure 1, avec une seule couche de matériau diélectrique, en STO, ayant une épaisseur e de 50nm,
- un condensateur A2, également selon la figure 1, avec une seule couche de matériau diélectrique ayant une épaisseur e de 20nm seulement,
- un condensateur A3, selon la figure 2, avec deux sous-couches diélectriques 4a et 4b, ayant chacune une épaisseur e de 20nm (soit une épaisseur Σe totale de STO de 40nm) et séparées par une couche intermédiaire métallique 5 de 20nm d'épaisseur.

| Condensateur | Épaisseur totale de STO Σe (nm) | Champ de claquage Ec (kV/cm) | Constante diélectrique relative εᵣ | Capacité surfacique C nF/mm² | Tension de claquage Vc (V) |
|---|---|---|---|---|---|
| A1 | 50 | 800 | 100 | 20 | 4 |
| A2 | 20 | 2000 | 80 | 40 | 4 |
| A3 | 2x20 | 2000 | 80 | 20 | 8 |

Bien que la constante diélectrique relative εᵣ du STO diminue avec l'épaisseur, passant de 100 pour une couche unique de 50nm d'épaisseur à 80 pour une couche de 20nm d'épaisseur, la capacité surfacique C du condensateur A3, proportionnelle à la constante diélectrique relative et inversement proportionnelle à l'épaisseur totale Σe de matériau diélectrique, reste sensiblement identique à celle du condensateur A1.

Simultanément, l'augmentation du champ de claquage Ec, qui passe de 800kV/cm pour une couche diélectrique de 50nm à 2000kV/cm pour 20nm, est suffisamment importante pour que la tension de claquage Vc (Vc = Ec x Σe) du condensateur A3 soit deux fois plus élevée que la tension de claquage des condensateurs A1 et A2 (8V au lieu de 4V).

De plus, pour un champ électrique donné, les courants de fuite sont réduits d'un facteur de l'ordre de 10 lorsque l'épaisseur d'une couche de matériau diélectrique à base de pérovskite passe de 50nm à 20nnm. Ainsi, les courants de fuite des condensateurs A2 et A3 sont très inférieurs à ceux du condensateur A1.

Ainsi, pour un diélectrique 3 d'épaisseur totale comparable (50nm pour la couche unique du condensateur A1 et 60nm pour l'empilement de deux sous-couches diélectrique de 20nm séparées par une couche intermédiaire métallique de 20nm du condensateur A3), le condensateur A3 a une capacité comparable à celle du condensateur A1, mais une tension de claquage Vc double et des courants de fuite réduits d'un facteur de l'ordre de 10.

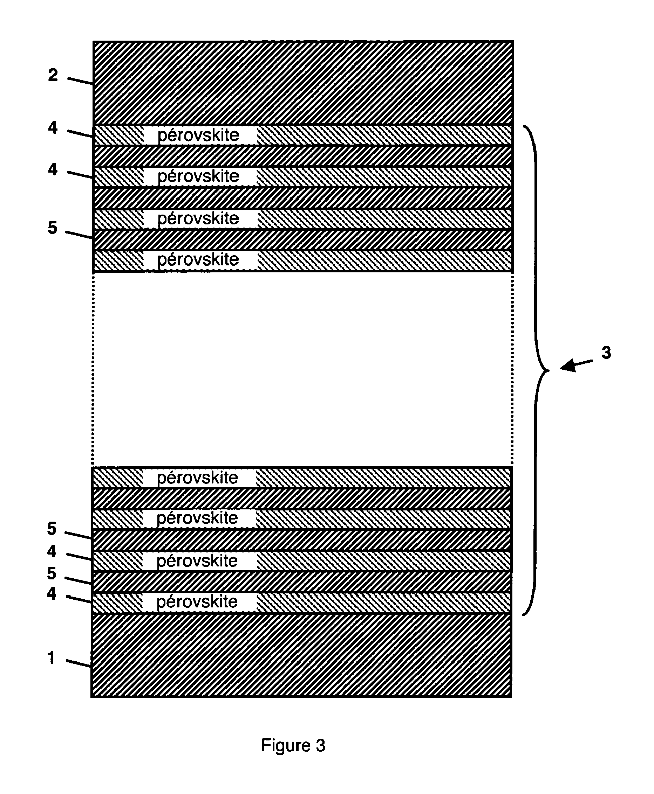

Comme représenté à la figure 3, le condensateur peut comporter une pluralité de couches diélectriques 4 superposées entre les deux électrodes 1 et 2, deux couches diélectriques 4 superposées adjacentes étant séparées par une couche intermédiaire métallique 5. Dans tous les cas, une sous-couche en matériau diélectrique 4 est en contact avec chacune des électrodes 1 et 2, c'est-à-dire que les première et dernière couches de l'empilement de sous-couches diélectriques 4 et de couches intermédiaires métalliques 5 sont constituées par des sous-couches diélectriques 4.

Si chaque sous-couche diélectrique 4 a une épaisseur e, la capacité surfacique d'un condensateur comportant n sous-couches diélectriques 4 est alors celle d'un condensateur ayant un diélectrique d'épaisseur Σe = ne et de constante diélectrique relative εᵣ correspondant à celle d'une seule sous-couche. Le champ de claquage Ec, qui correspond au champ de claquage d'une seule sous-couche, de très faible épaisseur, est cependant très supérieur à celui d'une couche unique d'épaisseur ne.

Le champ de claquage du condensateur ainsi que sa tension de claquage peuvent donc être nettement améliorés par l'utilisation de sous-couches diélectriques 4 en pérovskite, de faible épaisseur e par rapport à l'épaisseur totale ne de matériau diélectrique, et la séparation de deux sous-couches diélectriques adjacentes par une couche intermédiaire métallique 5. Les courants de fuite sont simultanément améliorés par la réduction d'épaisseur de chaque couche de diélectrique. Le nombre n de sous-couches 4 et le nombre n-1 de couches intermédiaires métalliques 5 et leurs épaisseurs respectives sont choisies en fonction des matériaux utilisés et des caractéristiques recherchées pour le condensateur.

À titre d'exemple, l'épaisseur de chaque sous-couche diélectrique 4 et de chaque couche intermédiaire métallique 5 est, de préférence, comprise entre quelques nanomètres et quelques dizaines de nanomètres. Chaque sous-couche 4 a, de préférence, une épaisseur inférieure ou égale à 50nm, par exemple de l'ordre de 20nm ou même moins.

Les couches intermédiaires métalliques 5, qui séparent deux sous-couches 4 adjacentes, sont électriquement isolées, c'est-à-dire qu'elles ne sont connectées électriquement ni aux électrodes 1 et 2 ni entre elles. Elles doivent cependant être suffisamment épaisses pour former des pellicules continues empêchant tout contact entre deux sous-couches diélectriques adjacentes. Avec les techniques de dépôt classiques, une épaisseur de 20nm est suffisante.

Les électrodes 1 et 2 et les couches intermédiaires métalliques doivent être dans un matériau compatible avec l'utilisation de la pérovskite. Elles ne doivent pas se dégrader à la température de cristallisation de la pérovskite, c'est-à-dire à une température comprise entre 400 et 800°C. Par ailleurs, le matériau diélectrique ne doit pas réagir avec les couches conductrices, ce qui exclue l'utilisation d'aluminium, qui s'oxyde au contact de la pérovskyte. Dans un mode de réalisation préférentiel elles sont en platine (Pt) ou en or (Au). Les électrodes 1 et 2 peuvent également être en oxyde conducteur, par exemple en IrO₂ ou RuO₂.

Les différentes couches constituant le condensateur peuvent être déposées par toute technique appropriée permettant le dépôt de couches minces.

Il est notamment possible de déposer des couches de platine de 10nm d'épaisseur par pulvérisation cathodique. D'autres techniques permettent le dépôt de couches très fines, constituant néanmoins un film continu. C'est notamment le cas de la technique de dépôt chimique en phase vapeur organométallique (MOCVD ou "Metal Organic Chemical Vapor Déposition") et de l'épitaxie par jets moléculaires (MBE ou "Molecular Beam Epitaxy"), qui permet le dépôt d'un film continu de platine d'une épaisseur de 2,72nm.

De manière analogue, plusieurs techniques permettent de déposer de très fines couches de matériau diélectrique. La technique de dépôt de couches atomiques (ALD ou "Atomic Layer Déposition"), qui a déjà été utilisée pour former des couches d'environ 3nm d'épaisseur pour des diélectriques comme le Hf02 et l'Al2O3, permet de faire un dépôt couche atomique par couche atomique. La technique MOCVD par injection permet d'atteindre des épaisseurs de quelques nanomètres (3 ou 4nm) pour des matériaux pérovskites comme le STO ou le BTO. La technique MBE permet également d'atteindre des épaisseurs nanométriques pour de nombreux matériaux, notamment pour le STO, tandis que la pulvérisation par faisceau d'ions (IBS ou "lon Beam Sputtering") permet d'obtenir une couche de STO de 10nm d'épaisseur.

Plus généralement, le matériau diélectrique pourrait être tout matériau ayant une constante diélectrique supérieure à 50 et dont le champ de claquage Ec augmente fortement au-dessous d'une certaine épaisseur e, si cette augmentation du champ de claquage est supérieure à la diminution associée de la constante diélectrique. Pour une capacité de valeur prédéterminée et une surface S prédéterminée, on peut en effet montrer que pour que la tension de claquage Vc(fig.3) d'un condensateur selon la figure 3 (avec n couches diélectriques superposées séparées par des couches intermédiaires métalliques) soit supérieure à la tension de claquage Vc(fig.1) d'un condensateur selon la figure 1, il suffit que, pour chaque couche diélectrique, l'augmentation du champ de claquage due à la réduction de son épaisseur soit supérieure à la diminution de la constante diélectrique :
E(fig.3) / E(fig.1) > ε(fig.1) / ε(fig.3).

L'invention est plus particulièrement intéressante pour augmenter la tension de claquage dans des applications dans lesquelles les capacités requises sont faibles, par exemple pour former des capacités de découplage RF en téléphonie mobile, typiquement de l'ordre de 1 pf à 100pF. De manière générale, l'invention permet donc, à épaisseur de diélectrique 3 comparable et à surface équivalente, de réaliser des capacités de même valeur diélectrique mais de tension de claquage supérieure, par exemple deux fois plus élevée.

## Revendications

1. Condensateur à films minces comportant deux électrodes (1, 2) séparées par un diélectrique (3) constitué par la superposition d'au moins deux sous-couches de matériau diélectrique, deux sous-couches diélectriques (4) superposées adjacentes étant séparées par une couche intermédiaire métallique (5), isolée électriquement, condensateur **caractérisé en ce que** le matériau diélectrique a une constante diélectrique supérieure à 50 et un champ de claquage (Ec) qui augmente fortement au-dessous d'une certaine épaisseur (e).

2. Condensateur selon la revendication 1, **caractérisé en ce que** le matériau diélectrique est à base de pérovskite et **en ce que** chaque sous-couche en matériau diélectrique (4) a une épaisseur inférieure ou égale à 50nm.

3. Condensateur selon la revendication 2, **caractérisé en ce que** chaque sous-couche en matériau diélectrique (4) a une épaisseur de l'ordre de 20nm.

4. Dispositif selon l'une des revendications 2 et 3, **caractérisé en ce que** chaque couche intermédiaire métallique (5) a une épaisseur inférieure ou égale à 20nm.

5. Dispositif selon l'une quelconque des revendications 2 à 4, **caractérisé en ce que** les couches intermédiaires métalliques (5) sont en platine.

6. Dispositif selon l'une quelconque des revendications 2 à 4, **caractérisé en ce que** les couches intermédiaires métalliques (5) sont en or.
